(19) Europäisches Patentamt / European Patent Office / Office européen des brevets

(11) **EP 1 592 235 B1**

(12) **EUROPEAN PATENT SPECIFICATION**

(45) Date of publication and mention
of the grant of the patent:
**23.11.2011 Bulletin 2011/47**

(51) Int Cl.:
***H04N 5/235*** *(2006.01)*     ***H04N 5/335*** *(2011.01)*

(21) Application number: **04708504.8**

(22) Date of filing: **05.02.2004**

(86) International application number:
**PCT/JP2004/001226**

(87) International publication number:
**WO 2004/071077 (19.08.2004 Gazette 2004/34)**

(54) **IMAGE PROCESSING DEVICE, IMAGE PROCESSING PROGRAM AND RECORDING MEDIUM FOR SAID PROGRAM**

BILDVERARBEITUNGSEINRICHTUNG, BILDVERARBEITUNGSPROGRAMM UND SPEICHERMEDIUM DAFÜR

DISPOSITIF DE TRAITEMENT D'IMAGES, PROGRAMME DE TRAITEMENT D'IMAGES ET SUPPORT D'ENREGISTREMENT POUR LE MÊME

(84) Designated Contracting States:
**DE FR GB**

(30) Priority: **05.02.2003 JP 2003028652**

(43) Date of publication of application:
**02.11.2005 Bulletin 2005/44**

(73) Proprietor: **Panasonic Corporation**
**Kadoma-shi**
**Osaka 571-8501 (JP)**

(72) Inventors:
• **SUMIYA, Kazunori**
**Hakusan-shi, Ishikawa-ken 924-0808 (JP)**
• **YATA, Manabu**
**Kanazawa-shi**
**Ishikawa, 920-0862 (JP)**

• **HIZUME, Tarou**
**Kanazawa-shi**
**Ishikawa, 920-0806 (JP)**
• **SUBE, Makoto**
**Yokohama-shi**
**Kanagawa, 222-0031 (JP)**

(74) Representative: **Holmes, Miles Keeton**
**Novagraaf International SA**
**Chemin de l'Echo 3**
**1213 Onex (CH)**

(56) References cited:
EP-A1- 0 609 592    WO-A1-00/78038
WO-A1-94/18801    DE-C1- 10 064 184
JP-A- 06 141 229    JP-A- 06 245 151
JP-A- 11 075 109    JP-A- 11 168 659
JP-A- 11 191 860    JP-A- 2001 169 177
JP-A- 2001 169 177    JP-A- 2003 204 450
US-A- 5 247 366

**Description**

**TECHNICAL FIELD OF THE INVENTION**

The present invention relates to an image processing apparatus for processing a digital image signal, and more particularly to an image processing apparatus for and an image processing program for, and a storage medium having stored therein the image processing program for obtaining images of a wide dynamic range.

**DESCRIPTION OF THE RELATED ART**

Up until now, there have been provided a wide variety of prior-art image processing apparatuses. One typical example of the conventional image processing apparatus of this type is disclosed in, for example, Japanese Patent Laid-Open Publication No. H06-141229.

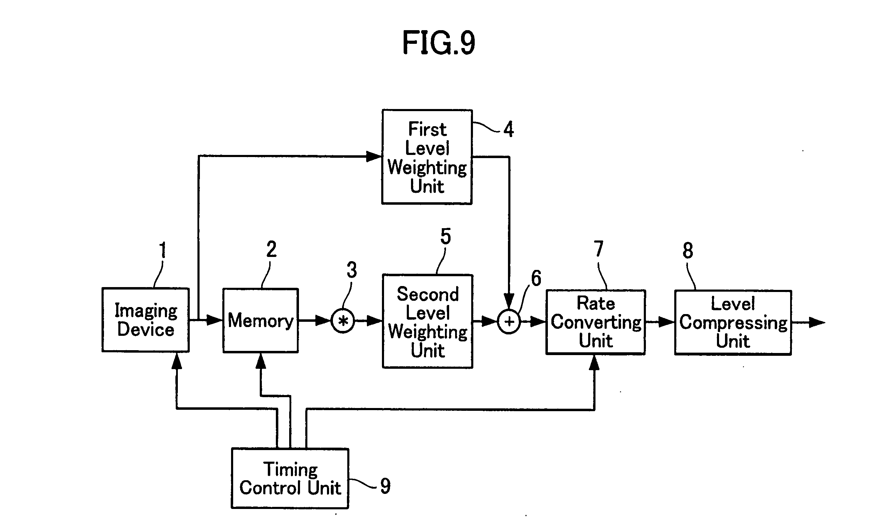

The conventional image processing apparatus is exemplified and shown in FIG. 9. As best shown in FIG. 9, the conventional image processing apparatus comprises an imaging device 1, a memory unit 2, a multiplying unit 3, a first level weighting unit 4, a second level weighting unit 5, an adding unit 6, a rate converting unit 7, a compressing unit 8, and a timing control unit 9. The imaging device 1 is adapted to take a plurality of images of a specific object for short and long exposure times to transform the images into image signals. The image signal indicative of an image taken by the imaging device 1 for the short exposure time will be hereinlater referred to simply as "image signal of the short exposure time". The image signal indicative of an image taken by the imaging device 1 for the long exposure time will be hereinlater referred to simply as "image signal of the long exposure time". The imaging device 1 is operative to output each of the image signals of the short and long exposure times alternately therethrough for every one field. The image signals of the short and long exposure times are processed and synthesized before being outputted therethrough. The memory unit 2 is operative to store therein the image signal of the short exposure time. The timing control unit 9 is operative to control the memory unit 2 to have the memory unit 2 output therethrough the image signal of the short exposure time at a timing synchronized with the image signal of the long exposure time outputted from the imaging device 1. The multiplying unit 3 is adapted to multiply the image signal of the short exposure time by the ratio of the long exposure time to the short exposure time to output the image signal of the short exposure time thus multiplied to the second level weighting unit 5. The second level weighting unit 5 is operative to multiply the image signal of the short exposure time inputted from the multiplying unit 3 by a weighting factor calculated in accordance with the signal level of the image signal of the short exposure time. Meanwhile, the first level weighting unit 4 is operative to multiply the image signal of the long exposure time inputted from the imaging device 1 by a weighting factor calculated in accordance with the signal level of the image signal of the long exposure time. The adding unit 6 is operative to add up the image signal of the short exposure time weighted by the second level weighting unit 5 and the image signal of the long exposure time weighted by the first level weighting unit 4. The image signals thus added are outputted from the adding unit 6 at a high rate faster than a usual rate because of the fact that the image signals have been read out at the imaging device 1 at the high rate so as to be later processed as image signals of the short and long exposure times. The rate converting unit 7 is operative to input the image signals at an input rate from the adding unit 6 to output the image signals at an output rate appropriate to a processing rate of an output unit such as, for example, a monitor. The compressing unit 8 is operative to compress each of the image signals inputted from the rate converting unit 7 in a signal level in accordance with a dynamic range of the output unit in such a manner that the image signals having signal levels higher than a predetermined level are compressed to the image signals having signal levels below the predetermined level to be outputted to the output unit such as, for example, a monitor.

The conventional image processing apparatus thus constructed as previously mentioned can provide the images of a wide dynamic range on the monitor so as to prevent dark portions of the object displayed on, for example, the monitor from becoming monotonously black and ambiguous and bright portions of the object displayed on the monitor from becoming monotonously white resulting from the fact that the image signals having high signal levels have been nonlinearly compressed by the compressing unit 8 to the image signals of signal levels below a predetermined level, and the monitor is operative to display the dark portions of the object on the basis of the image signals of the long exposure time and the bright portions of the object on the basis of the image signals of the short exposure time.

The conventional image processing apparatus thus constructed as previously mentioned, however, encounters a drawback in that complicates processes are required, the number of bits forming the image signal is increased, and thus circuits forming part thereof are increased in size resulting from the fact that the image signal of the short exposure time is multiplied by the ratio of the long exposure time to the short exposure time so that the signal level of the image signal of the short exposure time become close to that of the image signal of the long exposure time.

Further, the conventional image processing apparatus thus constructed as previously mentioned encounters another drawback in that processing delays are increased, and minute image information tends to be lost due to accumulated computing errors because of the fact that many computing operations are required to be carried out on the image signals.

Still further, the conventional image processing apparatus thus constructed as previously mentioned encounters another drawback in that the circuits forming part thereof are further increased in size in the event that the color image signals are processed by the reason that each of the color image signals is divided into a brightness signal and a color-difference signal and the color-difference signals are controlled on the basis of rate of nonlinear change of the brightness signals and therefore the rate of change of the brightness signals is required to be calculated.

The present invention is made for the purpose of overcoming the above mentioned drawbacks, and it is therefore an object of the present invention to provide an image processing apparatus, an image processing program, and a storage medium having stored therein the image processing program for obtaining image of a wide dynamic range in a simple manner while minimizing the processing delays and loss of minute image information due to accumulated computing errors.

## DISCLOSURE OF THE INVENTION

In accordance with a first aspect of the present invention, there is provided an image processing apparatus, according to claims 1-4

The image processing apparatus according to the present invention thus constructed can provide high quality images of a wide dynamic range to, for example, a monitor so as to prevent dark portions of the object displayed on the monitor from becoming monotonously black and ambiguous and bright portions of the object displayed on the monitor from becoming monotonously white in a simple manner without increasing the size of circuits forming part thereof as well as reduce loss of minute image information due to accumulated processing delays and computing errors.

Further, in the image processing apparatus according to the present invention, the level converting factor calculating means may be operative to calculate the level converting factor for each of the image signals in such a manner that the image signals respectively multiplied by the level converting factors are substantially equal to one another in signal level under the condition that the signal levels of the image signals are less than a predetermined value, and the image signals respectively multiplied by the level converting factors are reduced in signal level under the condition that the signal levels of the image signals are above the predetermined value.

The image processing apparatus according to the present invention thus constructed can reduce the number of computations carried out on the image signals, thereby making it possible for the image processing apparatus to be in a simple construction without increasing the size of the circuits forming part thereof.

Further, the image processing apparatus may further comprise: high frequency component extracting means for allowing only high frequency components of the image signals greater than a predetermined frequency level to be passed therethrough; and high frequency level converting factor calculating means for calculating a high frequency level converting factor for each of the high frequency components of the image signals passed by the high frequency component extracting means, and in which the adding means may be operative to multiply by the weighting factor the sum of each of the image signals multiplied by the level converting factor and the high frequency component of each of the image signals multiplied by the high frequency level factor.

The image processing apparatus according to the present invention thus constructed can provide high quality images of a wide dynamic range from bright portions to dark portions with sharpness using the high frequency components of the image signals in a simple manner without increasing the size of circuits forming part thereof.

Further, in the image processing apparatus, each of the image signals may include color components, and which may further comprise: representative value calculating means for calculating a representative value for the color components for each of the image signals, and in which the level converting factor calculating means may be operative to calculate a level converting factor for each of the image signals on the basis of the representative value, and the weighting factor calculating means may be operative to calculate a weighting factor for each of the image signals on the basis of the representative value.

The image processing apparatus according to the present invention thus constructed can employ the same level converting factor for each of representative values and thus obtain high quality color images of a wide dynamic range from bright portions to dark portions with the hue of the color images maintained constant as well as prevent circuits forming part thereof from being increased in size.

Further, in the image processing apparatus, the image signal inputting means may be operative to input a plurality of image signals from an imaging device operative to temporarily store therein image signals of respective exposure times for respective time periods in such a manner that the image signals are synchronized with one another.

The image processing apparatus according to the present invention thus constructed can provide high quality images of a wide dynamic range to, for example, a monitor so as to prevent dark portions of the object displayed on the monitor from becoming monotonously black and ambiguous and bright portions of the object displayed on the monitor from becoming monotonously white in a simple manner.

In accordance with a second aspect of the present invention, there is provided a program executable by an image processing apparatus according to claims 5 and 6.

The program according to the present invention thus constructed makes it possible for a microprocessor, a digital signal processor, or the like to carry out image processing steps to obtain high quality images of a wide dynamic range.

Further, in the program according to the present invention, the level factor calculating step is of calculating the level converting factor for each of the image signals in such a manner that the image signals respectively multiplied by the level converting factors are substantially equal to one another in signal level under the condition that the signal levels of the image signals are less than a predetermined value, and the image signals respectively multiplied by the level converting factors are reduced in signal level under the condition that the signal levels of the image signals are above the predetermined value.

The program according to the present invention thus constructed can reduce the number of computations carried out on the image signals, and thus makes it possible for a machine executing the program to obtain high quality images of a wide dynamic range in a simple manner while preventing the size of circuits forming part of the machine from being increased.

Further, in the program according to the present invention, the level factor calculating step may be of calculating the level converting factor for each of the image signals on the basis of predetermined data representative of level converting factor characteristics.

The program according to the present invention thus constructed makes it possible for a machine executing the program to obtain level appropriate converting factors in a simple manner.

In accordance with a third aspect of the present invention, there is provided a storage medium having stored therein a program executable by an image processing apparatus according to claims 7 and 8.

The storage medium having stored therein a program according to the present invention thus constructed makes it possible for a microprocessor, a digital signal processor, or the like to carry out image processing steps to obtain high quality images of a wide dynamic range.

Further, in the storage medium having stored therein a program executable by an image processing apparatus according to the present invention, the level factor calculating step may be of calculating the level converting factor for each of the image signals in such a manner that the image signals respectively multiplied by the level converting factors are substantially equal to one another in signal level under the condition that the signal levels of the image signals are less than a predetermined value, and the image signals respectively multiplied by the level converting factors are reduced in signal level under the condition that the signal levels of the image signals are above the predetermined value.

The storage medium having stored therein a program according to the present invention thus constructed can reduce the number of computations carried out on the image signals, and thus makes it possible for a machine executing the program to make the image signals substantially equal to one another in signal level under the condition that the signal levels of the image signals are less than a predetermined value, and the image signals reduced in signal level under the condition that the signal levels of the image signals are above the predetermined value.

Further, in the storage medium having stored therein a program executable by an image processing apparatus according to the present invention, the level factor calculating step may be of calculating the level converting factor for each of the image signals on the basis of predetermined data representative of level converting factor characteristics.

The storage medium having stored therein a program according to the present invention thus constructed makes it possible for a machine executing the program to obtain level appropriate converting factors in a simple manner.

## BRIEF DESCRIPTION OF THE DRAWINGS

The features and advantages of an image processing apparatus and an image processing program according to the present invention will be more clearly understood from the following description taken in conjunction with the accompanying drawings in which:

FIG. 1 is a block diagram showing a first preferred embodiment of the image processing apparatus according to the present invention;

FIG. 2 is a graph showing signal levels in relation to brightness level of an object;

FIG. 3(a) is a graph showing a level compressing function applied to image signals indicative of images taken for long exposure time;

FIG. 3(b) is a graph showing level converting factors in relation to image signals indicative of images taken for long exposure time;

FIG. 3(c) is a graph showing a level compressing function applied to image signals indicative of images taken for short exposure time;

FIG. 3(d) is graph showing level converting factors in relation to image signals indicative of images taken for short exposure time;

FIG. 4 is a graph showing signal levels of image signals multiplied by the level converting factors respectively shown in FIG. 3(c) and 3(d);

FIG. 5 is graph showing weighting factors calculated by a weighting factor calculating unit forming part of the image processing apparatus shown in FIG. 1;

FIG. 6 is a block diagram showing a second preferred embodiment of the image processing apparatus according to the present invention;

FIG. 7 is a block diagram showing a third preferred embodiment of the image processing apparatus according to the present invention;

FIG. 8 is a block diagram showing an imaging apparatus applicable to the image processing apparatus according to the present invention; and

FIG. 9 is a block diagram showing a conventional image processing apparatus.

## DESCRIPTION OF THE PREFERRED EMBODIMENTS

A preferred embodiment of the present invention will be described hereinafter with reference to the drawings.

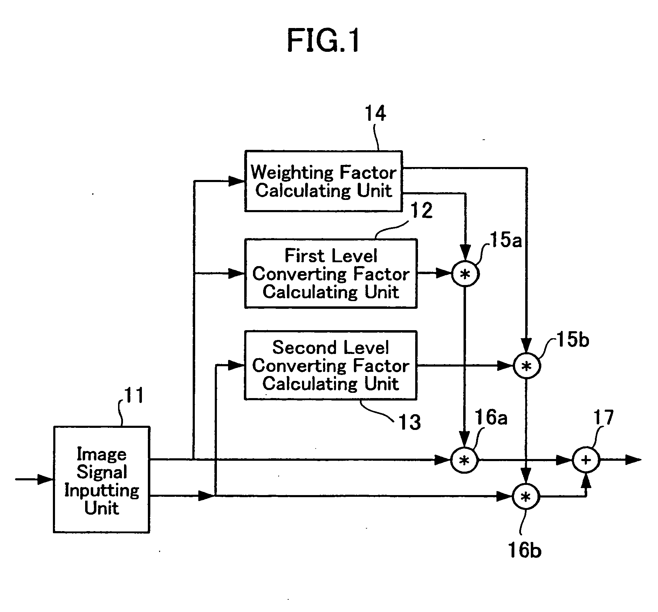

FIG. 1 is a block diagram showing a first preferred embodiment of an image processing apparatus according to the present invention.

As will be clearly seen from FIG. 1, the first embodiment of the image processing apparatus according to the present invention comprises image signal inputting means constituted by an image signal inputting unit 11 for inputting a plurality of image signals including image signal each transformed from images of a specific object taken for a short exposure time, hereinlater referred to simply as a "short image signal" and an image signal transformed from an image of a specific object taken for a long exposure time, hereinlater referred to simply as a "long image signal", a first level converting factor calculating unit 12 for calculating a level converting factor for each of the long image signals in such a manner that the long image signals respectively multiplied by the level converting factors are substantially equal to one another in signal level under the condition that the signal levels of the long image signals are less than a predetermined value, and the long image signals respectively multiplied by the level converting factors are reduced in signal level under the condition that the signal levels of the long image signals are above the predetermined value, and a second level converting factor calculating unit 13 for calculating a level converting factor for each of the short image signals in such a manner that the short image signals respectively multiplied by the level converting factors are substantially equal to one another in signal level under the condition that the signal levels of the short image signals are less than a predetermined value, and the short image signals respectively multiplied by the level converting factors are reduced in signal level under the condition that the signal levels of the short image signals are above the predetermined value. The first level converting factor calculating unit 12 and the second level converting factor calculating unit 13 collectively constitute level converting factor calculating means.

The image processing apparatus further comprises weighting factor calculating means constituted by a weighting factor calculating unit 14 for calculating a weighting factor for each of the long image signals and the short image signals, a first multiplying unit 15a for multiplying the level converting factor calculated by the first level converting factor calculating unit 12 by the weighting factor calculated by the weighting factor calculating unit 14, and a second multiplying unit 15b for multiplying the level converting factor calculated by the second level converting factor calculating unit 13 by the weighting factor calculated by the weighting factor calculating unit 14.

The image processing apparatus further comprises a third multiplying unit 16a for multiplying each of the long image signals by the product of the level converting factor calculated by the first level converting factor calculating unit 12 and the weighting factor calculated by the weighting factor calculating unit 14 calculated by the first multiplying unit 15a, a fourth multiplying unit 16b for multiplying each of the short image signals by the product of the level converting factor calculated by the second level converting factor calculating unit 13 and the weighting factor calculated by the weighting factor calculating unit 14 calculated by the second multiplying unit 15b, and adding means constituted by an adding unit 17 for adding up each of the long image signals multiplied by the third multiplying unit 16a and the short image signals multiplied by the fourth multiplying unit 16b.

The operation of the first embodiment of the image processing apparatus according to the present invention will be described hereinlater.

The image signal inputting unit 11 is operated to input a plurality of image signals different from one another in exposure time. The image signals inputted by the image signal inputting unit 11 are synchronized with one another so to be processed simultaneously, and include long image signals and short image signals. Each of the image signals has a signal level. The first level converting factor calculating unit 12 is operated to calculate a level converting factor for each of the long image signals, and the second level converting factor calculating unit 13 is operated to calculate a level converting factor for each of the short image signals. The operations performed by the first level converting factor calculating unit 12 and the second level converting factor calculating unit 13 will be described later.

The weighting factor calculating unit 14 is operated to calculate a weighting factor for each of the long image signal and the short image signal on the basis of the signal level of each of the long image signal. The operation performed by the weighting factor calculating unit 14 will be described later.

The first multiplying unit 15a is operated to multiply the level converting factor calculated by the first level converting factor calculating unit 12 by the weighting factor calculated by the weighting factor calculating unit 14. The third multiplying unit 16a is then operated to multiply each of the long image signals by the product of the level converting factor calculated by the first level converting factor calculating unit 12 and the weighting factor calculated by the weighting factor calculating unit 14 calculated by the first multiplying unit 15a with the result that the long image signals thus calculated are substantially equal to one another in signal level under the condition that the signal levels of the long image signals are less than a predetermined value, and the long image signals thus calculated are reduced in signal level under the condition that the signal levels of the long image signals are above the predetermined value, as well as weighted by the weighting factor. Likewise, the second multiplying unit 15b is operated to multiply the level converting factor calculated by the second level converting factor calculating unit 13 by the weighting factor calculated by the weighting factor calculating unit 14. The fourth multiplying unit 16b is then operated to multiply each of the short image signals by the product of the level converting factor calculated by the second level converting factor calculating unit 13 and the weighting factor calculated by the weighting factor calculating unit 14 calculated by the second multiplying unit 15b, with the result that the short image signals thus calculated are substantially equal to one another in signal level under the condition that the signal levels of the short image signals are less than a predetermined value, and the short image signals thus calculated are reduced in signal level under the condition that the signal levels of the short image signals are above the predetermined value, as well as weighted by the weighting factor.

The adding unit 17 is operated to add up each of the long image signals multiplied by the third multiplying unit 16a and the short image signals multiplied by the fourth multiplying unit 16b and output the image signals thus added up to, for example, a monitor.

The following description will be directed to a method of calculating the level converting factors for the long image signal and the short image signal.

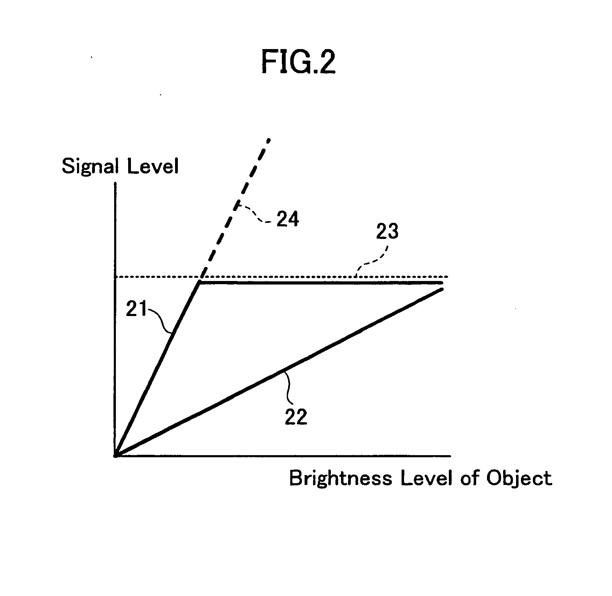

FIG 2 is a graph showing signal levels in relation to brightness levels of the object, wherein the lateral axis indicates the brightness level of the object and the longitudinal axis indicates the signal level of the image signal.

As will be clearly seen from FIG 2, the signal level of the long image signal denoted by a reference numeral 21 is saturated substantially to a saturated level 23 under the condition that the brightness level of the object is increased above a predetermined upper brightness level, and the gradient of the signal level of short image signal denoted by a reference numeral 22 is smaller than the gradient of the signal level of the long image signal 21 in correlation with a ratio of respective exposure times. This means that an image displayed by, for example, the monitor based on the long image signals 21 indicative of portions of the object whose brightness level is above the upper brightness level becomes monotonously white and an image display by the monitor based on the short image signals 22 indicative of portions of the object whose brightness level is low becomes monotonously dark and ambiguous.

The present embodiment of the image processing apparatus according to the present invention is operative to synthesize the long image signals 21 and the short image signals 22 in accordance with the brightness levels of the object to obtain high quality images of a wide dynamic range so as to be displayed on, for example, a monitor as an image of the object having bright and dark portions to be clearly seen by a viewer. The long image signals 21 and the short image signals 22 are required to be processed before being synthesized, for the purpose of appropriately adjusting the signal levels of the long image signals 21 and the short image signals 22. In the case that each of the short image signals 22 is just multiplied by a ratio of the long exposure time to the short exposure time, the signal levels of the short image signals 22 thus multiplied, however, may increase above a predetermined upper signal level and could not be displayed by the monitor because of the fact that the signal levels of the image signals above the upper signal level would require a large number of bits while the output unit such as, for example, a monitor could display image signals only with the limited number of bits. Accordingly, the signal levels of the image signals thus multiplied should be reduced in the number of bits to an appropriate level.

This leads to the fact that, in the present embodiment, the signal level of each of the image signals above the predetermined upper signal level are nonlinearly compressed to have the number of the bits forming part of each of the image signals compressed to an appropriate number.

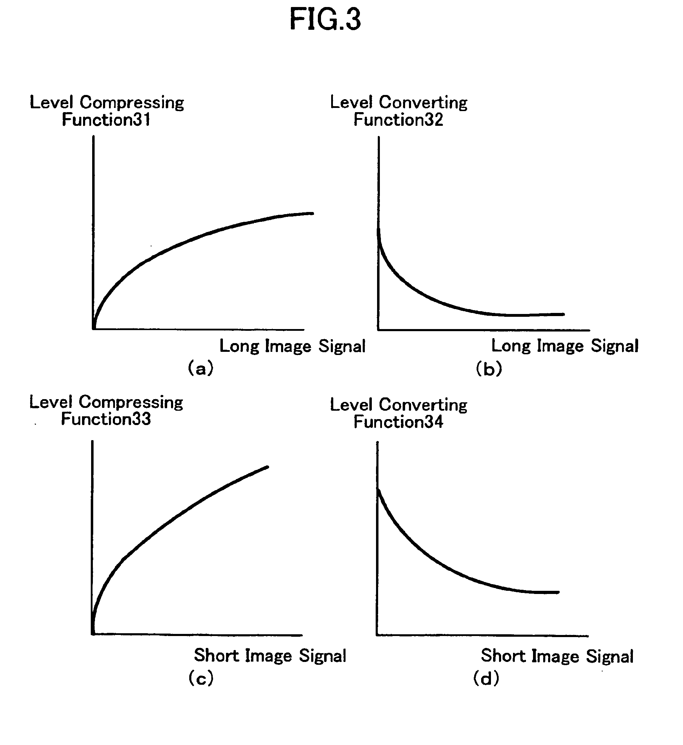

FIGS. 3(a) to (d) are graphs each showing characteristic data of level compressing function and level converting factors applied to the long image signals and the short image signals.

FIG 3(a) is a graph showing characteristics of a level compressing function applied to the long image signals 21.

The level compressing function denoted by a reference numeral 31 is determined by performing the computation represented by an expression 1 as follows.

$$Y = F\ long\ (X) \qquad\qquad (Expression\ 1)$$

X: inputted image signals

Wherein "F long (X)" is intended to mean the level compressing function 31, and "Y" is intended to mean the value of the computation.

The long image signals are computed in accordance with the level compressing function 31. This means that the level compressing function 31 can be arbitrary specified so as to make the long image signals have characteristics appropriate for the output unit such as a monitor. The level compressing function 31 may be specified so that, for example, the signal levels of the long image signals thus computed in accordance with the level compressing function 31 are drastically increased under the condition that the signal levels of the long image signals are low, and the signal levels of the long image signals are reduced below the predetermined saturated level under the condition that the signals levels of the long image signals are above the predetermined saturated level. The image of the object displayed by, for example, the monitor based on the image signals thus computed can be clearly seen by a viewer because of the fact that the dark portions of the object are displayed on the basis of the image signals having signal levels thus increased and the bright portions of the object are displayed on the basis of the image signals thus compressed below the predetermined saturated level.

Further, in view of an object and its intended use, the specified level compressing function 31 may be in the form of, for example, an S shape. The image signals thus computed can be advantageous especially when the image of the object displayed on the basis of the long image signals having middle signal levels is required to be clearly seen. From the description in the above, it is understood that the characteristics of the level compressing function 31 can be arbitrary specified utilizing, for example, a microcomputer in view of an object and its intended use to obtain desired image signals of high quality.

FIG 3(b) is a graph showing characteristics of level converting factors in relation to the long image signals 21.

The level converting factors denoted by a reference numeral 32 are determined in combination with the level compressing function 31 by performing the computation represented by an expression 2 as follows.

$$A\ long\ (X) = F\ long\ (X)\ /\ X \qquad\qquad (Expression\ 2)$$

Wherein "A long (X)" is intended to mean the level converting factors 32 and "F long (X)" is intended to mean the level compressing function 31.

It will be understood that the long image signals multiplied by the level converting factors 32 results in the values equal to those of the long image signals computed in accordance with the level compressing function 31 as will be clearly seen from an expression 3 described below.

$$A\ long\ (X) * X = F\ long\ (X)\ /\ X * X = Y \qquad\qquad (Expression\ 3)$$

This leads to the fact that high signal levels of the long image signals can be compressed after the long image signals are multiplied by the level converting factors 32.

FIG. 3(c) is a graph showing characteristics of a level compressing function applied to short image signals 22.

Similar to the description in the above about the long image signals, the level compressing function denoted by a reference numeral 33 is determined by performing the computation represented by an expression 4 as follows.

$$y = F\ short\ (X) \qquad\qquad (Expression\ 4)$$

X: inputted image signals

Wherein "F short (X)" is intended to mean the level compressing function 33, and "Y" is intended to mean the value of the computation.

Here, the signal levels of the short image signals can be adjusted in such a manner that the signal levels of the short image signals become close to those of the long image signals by performing the computation represented by an expression 5 as follows.

$$F\ short\ (X) = F\ long\ (X*N) \qquad\qquad (expression\ 5)$$

N : ratio of the long exposure time to the short exposure time

FIG. 3(d) is a graph showing characteristics of level converting factors in relation to the short image signals 22.

Similar to the description in the above about the long image signals, the level converting factors denoted by a reference numeral 34 are determined in combination with the level compressing function 33 by performing the computation represented by an expression 6 as follows,

$$A \text{ short } (X) = F \text{ short } (X) / X \qquad \text{(Expression 6)}$$

Wherein "A short (X)" is intended to mean the level converting factors 34 and "F short (X)" is intended to mean the level compressing function 33.

It will be understood that the short image signals multiplied by the level converting factors 34 results in the values equal to those of the short image signals computed in accordance with the level compressing function 33 as will be clearly seen from an expression 7 described below.

$$A \text{ short } (X) * X = F \text{ short } (X) / X * X = Y \qquad \text{(Expression 7)}$$

This leads to the fact that the signal levels of the short image signals can be adjusted in such a manner that the signal levels of the short image signals become close to those of the long image signals as well as the signal levels of the short image signals are compressed by multiplying the short image signals by the level converting factors 34. Here, it is not necessary to make the signal levels of the short image signals become exactly equal to those of the long image signals.

The level converting factors 32 and 34 respectively shown in FIGS. 3(b) and 3(d) may have been calculated in advance by, for example, a microcomputer, and stored in, for example, a memory as being in the format of a table, and the present embodiment of the image processing apparatus may obtain the level converting factors 32 and 34 corresponding to the signal levels of the long image signal and the short image signal with reference to the table stored in the memory.

It is more preferable in view of saving a memory space that a plurality of points representative of the level converting factors 32 and 34 respectively shown in FIGS. 3(b) and 3(d) may have been selected in advance and stored in, for example, a memory as being in the format of a table, and the present embodiment of the image processing apparatus may obtain the level converting factors 32 and 34 corresponding to the signal levels of the long image signal and the short image signal with reference to the table stored in the memory, if necessary, interpolating the points.

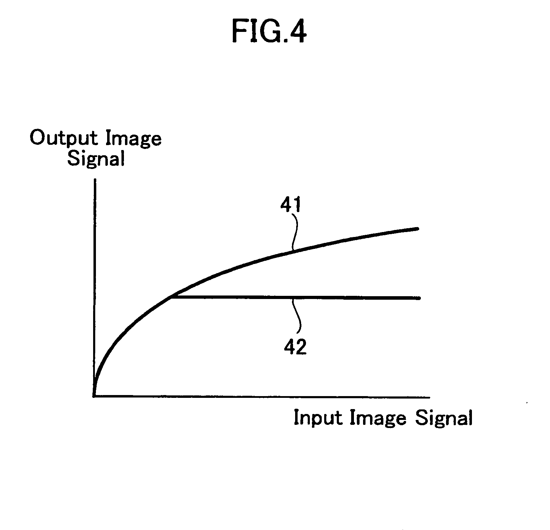

FIG. 4 is a graph showing characteristics of signal levels of image signals multiplied by the level converting factors respectively shown in FIG. 3(c) and 3(d) wherein the lateral axis indicates the inputted image signal before the level converting process and the longitudinal axis indicates the outputted image signal after the level converting process. As will be clearly seen from FIG. 4, it is to be understood that the signal levels of the outputted image signals, viz., both the outputted long image signal 41 and the outputted short image signal 42 are drastically increased under the condition that the signal levels of the inputted image signals are low, and the signal levels of the outputted image signals are reduced below the predetermined saturated level under the condition that the signals levels of the inputted image signals are above the predetermined saturated level. Further, it is to be understood that the long image signal 41 and the short image signal 42 are substantially identical in signal level under the condition that the signal levels of the inputted image signals are low.

The following description will be directed to a method of calculating the weighting factors for the long image signal and the short image signal.

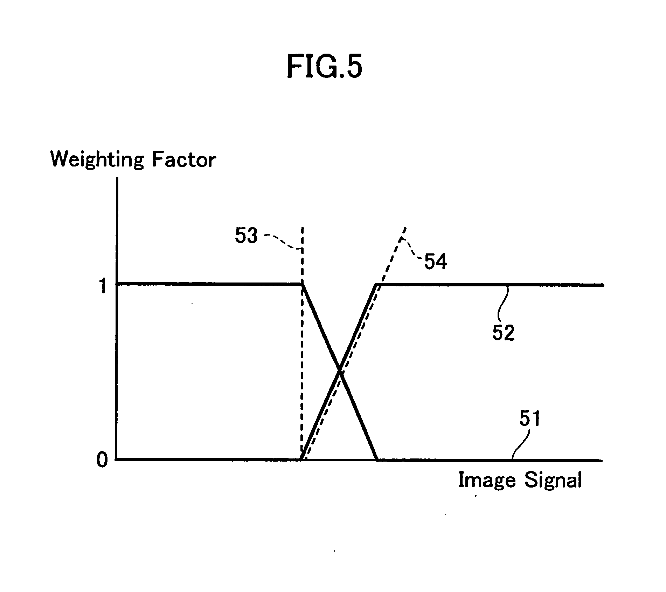

FIG 5 is a graph showing weighting factors calculated by the weighting factor calculating unit 14.

The weighting factor calculating unit 14 is operative to calculate a weighting factor 51 for the long image signal based on the signal level of the long image signal and a weighting factor 52 for the short image signal based on the signal level of the short image signal in such a manner that the weighting factor 51 for the long image signal is large under the condition that the signal level of the inputted image signal is low and the weighting factor 52 for the short image signal is large under the condition that the signal level of the inputted image signal is high as will be clearly seen from FIG 5. This makes it possible for the present embodiment of the image processing apparatus to use the long image signals, which are less degraded due to noises, to display the dark portions of the image and the short image signals, which are not saturated, to display the bright portions of the image so as to obtain high quality image signals.

Further, the weighting factor calculating unit 14 is operative to calculate a weighting factor 51 for the long image signal and a weighting factor 52 for the short image signal in such a manner that the sum of the weighting factor 51 for the long image signal and the weighting factor 52 for the short image signal is constantly maintained at one while adaptively changing the weighting factor 51 for the long image signal and the weighting factor 52 for the short image signal in response to their signal levels. This makes it possible for the present embodiment of the image processing apparatus to prevent the sum of the long image signals multiplied by the weighting factors and the short image signals multiplied by the weighting factors from being severely fluctuated in signal levels and thus smoothly synthesize the long image signals and the short image signals based on the ratio of their signal levels.

Further, the weighting factor calculating unit 14 is designed to calculate a weighting factor 51 for the long image signal and the weighting factor 52 for the short image signal under the condition that the signal level of image signal is above a predetermined crossing start level denoted by a reference numeral 53 with a gradient of the short image signals denoted by a reference numeral 54 as clearly seen from FIG 5. According to the present invention, the present embodiment of the image processing apparatus may adaptively change the crossing start level 53 and the gradient 54 so as to process image signals of varies conditions.

While it has been described in the above about the fact that the present embodiment of the image processing apparatus is operative to process the long image signals and the short image signals separately from each other, the image processing apparatus according to the present invention is not limited to processing the long image signals and short image signals separately from each other. The image processing apparatus according to the present invention may comprise, for example, one level converting factor calculating unit in place of the first level converting factor calculating unit 12 and the second level converting factor calculating unit 13 because of the fact that the long image signals and the short image signals are processed in the same manner except for the values of the level converting factors. This means that the image processing apparatus may process the long image signals and the short image signals as time division signals at a double rate, and comprise one single level converting factor calculating unit for selectively calculating level converting factors for the long image signals and the short image signals switched one after another, and the weighting factor calculating unit 14 is operative to input the long image signals only, and the adding unit 17 is operative to add up each of the long image signals and the short image signals as well as to convert the rate. The image processing apparatus thus constructed is preferable in view of the size of the circuit.

Further, though it has been described herein about the fact that the present embodiment of the image processing apparatus is operative to process two types of image signals different from each other in exposure time, viz., the long image signals and the short image signals, the image processing apparatus according to the present invention is not limited to processing two types of image signals. It is needless to mention that the same effect can still be obtained even when the image processing apparatus according to the present invention processes, for example, more than two types of image signals different from one another in exposure time.

As will be seen from the foregoing description, it will be understood that the present embodiment of the image processing apparatus according to the present invention can reduce the number of computations and still provide high quality images of a wide dynamic range to, for example, a monitor so as to prevent dark portions of the object displayed on the monitor from becoming monotonously black and ambiguous and bright portions of the object displayed on the monitor from becoming monotonously white in a simple manner without increasing the size of circuits forming part thereof resulting from the facts that the image signals are multiplied by the level converting factors to be substantially close to one another in signal level below a predetermined signal level and the image signals are multiplied by the weighting factors. Further, the present embodiment of the image processing apparatus can reduce the number of computations and loss of minute image information due to accumulated processing delays and computing errors resulting from the fact that the level converting factors are multiplied by the weighting factors before the image signals are multiplied by the level converting factors.

Further the more, the present embodiment of the image processing apparatus can prevent circuits forming part thereof from being increased in size due to the increase in the number of bits resulting from the fact that the image signals are multiplied by the level converting factors to be substantially close to one another in signal level below a predetermined signal level.

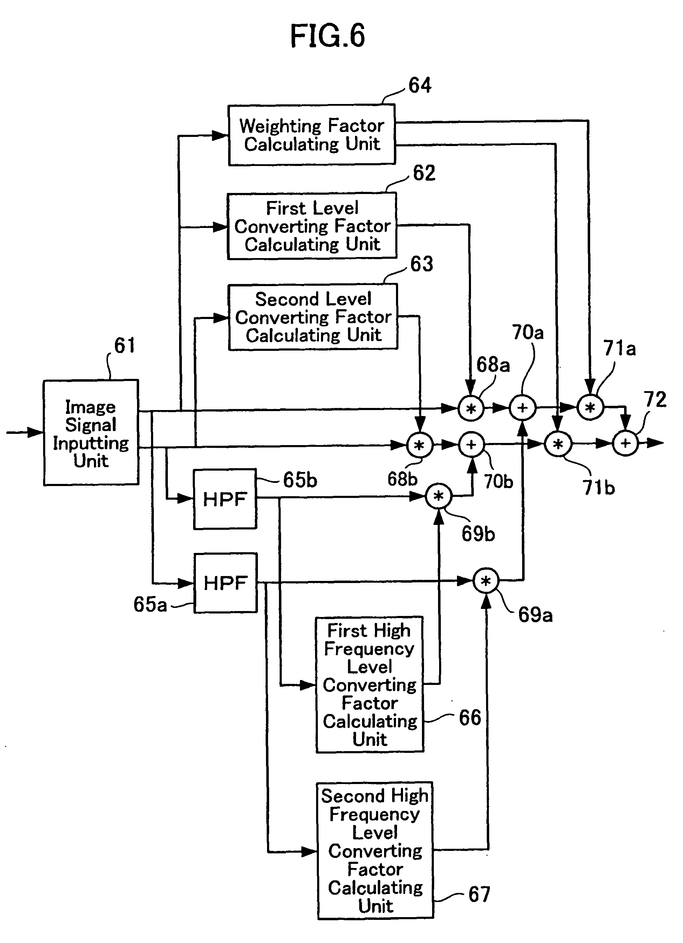

FIG. 6 is a block diagram showing a second preferred embodiment of an image processing apparatus according to the present invention.

As will be clearly seen from FIG. 6, the second embodiment of the image processing apparatus according to the present invention is substantially the same in construction as the first embodiment of the image processing apparatus except for the fact that the second embodiment of the image processing apparatus further comprises high frequency component extracting means constituted by high pass filters, hereinlater simply referred to as a HPF 65a and a HPF 65b for allowing only high frequency components of the image signals greater than a predetermined frequency level to be passed therethrough and high frequency level converting factor calculating means constituted by a first high frequency level converting factor calculating unit 66 for calculating a high frequency level converting factor for each of the high frequency components of the short image signals passed by the HPF 65a and a second high frequency level converting factor calculating unit 67 for calculating a high frequency level converting factor for each of the high frequency components of the long image signals passed by the HPF 65b. The parts same as the first embodiment of the sound retrieval apparatus are not described in detail to avoid tedious repetition.

The following description will be directed to constituent elements forming part of the present embodiment of the image processing apparatus different from the first embodiment.

The HPF 65a is adapted to allow only high frequency components of the long image signals greater than a predetermined frequency level to be passed therethrough. The HPF 65b is adapted to allow only high frequency components of the short image signals greater than a predetermined frequency level to be passed therethrough. The first high frequency level converting factor calculating unit 66 is adapted to calculate a high frequency level converting factor for each of the high frequency components of the short image signals passed by the HPF 65b. Here, the high frequency level converting factors may have been calculated in advance and stored in, for example, a memory as being in the format of a table. Further, the first high frequency level converting factor calculating unit 66 may calculate a high frequency level converting factor for each of the high frequency components of the short image signals in such a manner that the high frequency components of the short image signals have appropriate characteristics different from those of the short image signals multiplied by the level converting factors, e.g., the high frequency components of the short images having high signal levels are not so much compressed. The image processing apparatus thus constructed makes it possible for the high frequency components of the short image signals to remain after all of the image signals are added up, and thus can obtain sharp images.

Likewise, the second high frequency level converting factor calculating unit 67 is adapted to calculate a high frequency level converting factor for each of the high frequency components of the long image signals passed by the HPF 65a. The second high frequency level converting factor calculating unit 67 may calculate a high frequency level converting factor for each of the high frequency components of the long image signals in such a manner that the high frequency components of the long image signals have appropriate characteristics different from those of the short image signals multiplied by the level converting factors, e.g., the high frequency components of the long images having high signal levels are not so much compressed. The image processing apparatus thus constructed makes it possible for the high frequency components of the long image signals to remain after all of the image signals are added up, and thus can obtain sharp images.

The multiplying unit 68a is operative to multiply the long image signals inputted by the image signal inputting unit 61 by the level converting factor calculated by the first level converting factor calculating unit 62. The multiplying unit 69a is operative to multiply the high frequency components of the long image signals passed by the HPF 65a by the high frequency level converting factors calculated by the second high frequency level converting factor calculating unit 67. The adding unit 70a is operative to add up the long image signals multiplied by the multiplying unit 68a and the high frequency components of the long image signals multiplied by the multiplying unit 69a.

Likewise, the multiplying unit 68b is operative to multiply the short image signals inputted by the image signal inputting unit 61 by the level converting factor calculated by the second level converting factor calculating unit 63. The multiplying unit 69b is operative to multiply the high frequency components of the short image signals passed by the HPF 65b by the high frequency level converting factors calculated by the first high frequency level converting factor calculating unit 66. The adding unit 70b is operative to add up the short image signals multiplied by the multiplying unit 68a and the high frequency components of the short image signals multiplied by the multiplying unit 69b.

The multiplying unit 71a is operative to multiply the long image signals added by the adding unit 70a by the weighting factors calculated by the weighting factor calculating unit 64. The multiplying unit 71b is operative to multiply the short image signal added by the adding unit 70b by the weighting factors calculated by the weighting factor calculating unit 64. The adding unit 72 is operative to add up the long image signals added by the adding unit 70a and the short image signals added by the adding unit 70b and output the image signal thus added up to, for example, a monitor for displaying the image signals.

As will be seen from the foregoing description, it will be understood that the present embodiment of the image processing apparatus according to the present invention makes it possible for the high frequency components of the short image signals to remain after all of the image signals are added up, and thus can obtain sharp images in high frequency components, viz., high quality images of a wide dynamic range as well as prevent circuits forming part thereof from being increased in size due to the increase in the number of bits to make the image signals substantially close to one another as in the case of the conventional image processing apparatus, resulting from the fact that the image processing apparatus is operative to extract high frequency components from the image signals and multiply the high frequency components by high frequency level converting factors appropriate for the high frequency components.

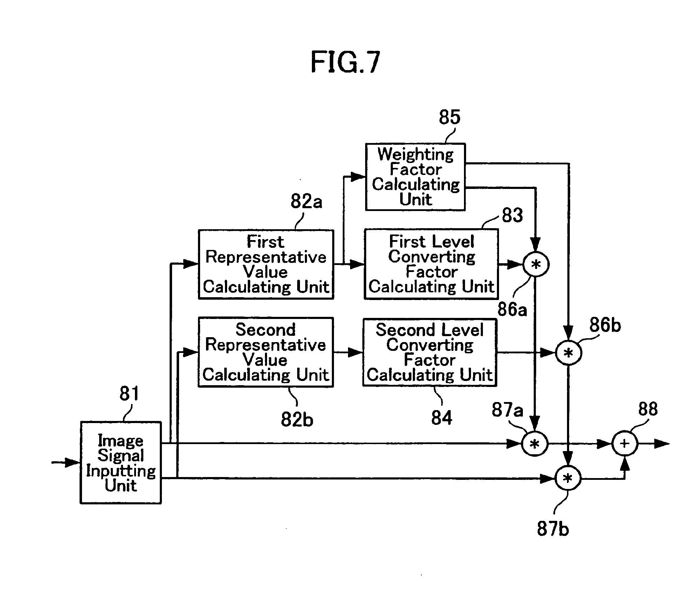

FIG. 7 is a block diagram showing a third preferred embodiment of an image processing apparatus according to the present invention.

The third embodiment of the image processing apparatus according to the present invention is operative to process color image signals and, as will be clearly seen from FIG. 7, is substantially the same in construction as the first embodiment of the image processing apparatus except for the fact that the second embodiment of the image processing apparatus further comprises representative value calculating means constituted by a first representative value calculating unit 82a for calculating a representative value for each of the long image signals, and a second representative value calculating unit 82b for calculating a representative value for each of the short image signals.

The following description will be directed to constituent elements forming part of the present embodiment of the image processing apparatus different from the first embodiment.

In order to process a color image, image data indicative of the color image, in general, is required to be inputted as, for example, primary color image signals indicative of red (R), green (G), and blue (B), complementary color image signals indicative of cyan (Cy), magenta (Mg), yellow (Ye), and green (G), or the like. The aforementioned color image signals indicative of respective color component information are different from one another in signal level. This leads to the fact that the ratio of respective color components may be distorted when the image signals are nonlinearly compressed, and thus the hue of the color images may be changed in the case that the first embodiment of the image processing apparatus simply processes the color image signals.

In the present embodiment of the image processing apparatus according to the present invention, the first representative value calculating unit 82a is operative to calculate a representative value for the color components for each of the long image signals, and the second representative value calculating unit 82b is operative to calculate a representative value for the color components for each of the short image signals. Here, the representative value is intended to mean, for example, a maximum value, or an average value, viz., a brightness value of the complementary color image signal, or the like. Further, the representative value may be a brightness value of a primary color image signal, which can be computed in accordance with an expression 8 described below.

$$\text{Brightness Value} = 0.3 * R + 0.6 * G + 0.1 * B \qquad \text{(Expression 8)}$$

The first level converting factor calculating unit 83 is operative to calculate a level converting factor for each of the long image signals on the basis of the representative value calculated by the first representative value calculating unit 82a. The second level converting factor calculating unit 84 is operative to calculate a level converting factor for each of the short image signals on the basis of the representative value calculated by the second representative value calculating unit 82b.

The weighting factor calculating unit 85 is operative to input the representative value calculated by the first representative value calculating unit 82a and calculate a weighting factor for each of the long image signals on the basis of the representative value. The first multiplying unit 86a is operative to multiply the level converting factor calculated by the first level converting factor calculating unit 83 by the weighting factor calculated by the weighting factor calculating unit 85, and the second multiplying unit 86b is operative to multiply the level converting factor calculated by the second level converting factor calculating unit 84 by the weighting factor calculated by the weighting factor calculating unit 85. Likewise, the third multiplying unit 87a, the fourth multiplying unit 87b, and the adding unit 88 operate in the same manner as the third multiplying unit 16a, the fourth multiplying unit 16b, and the adding unit 17 operate in the first embodiment.

As will be seen from the foregoing description, it will be understood that the present embodiment of the image processing apparatus according to the present invention ensures that the ratio of respective color components remains unchanged and thus can obtain high quality color images of a wide dynamic range with the hue of the color images maintained constant as well as prevent circuits forming part thereof from being increased in size due to the increase in the number of bits to make the image signals substantially close to one another and the division process to calculate the rate of change of the brightness signals as in the case of the conventional image processing apparatus, resulting from the fact that the image processing apparatus is operative to multiply each of the image signals by the factors calculated based on the representative value for the color components.

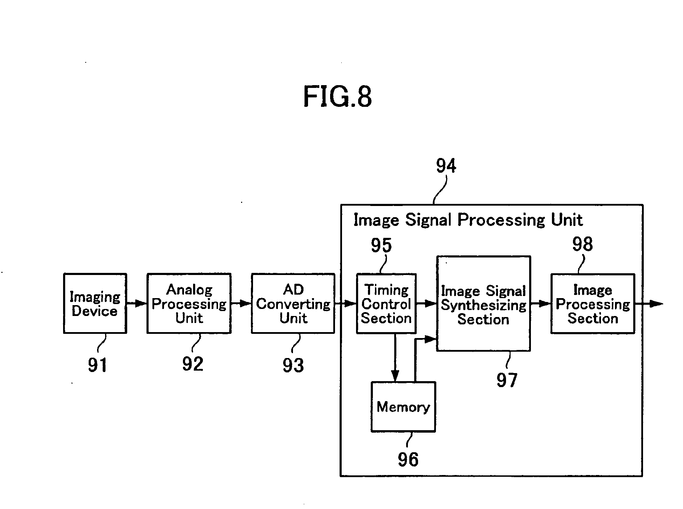

FIG. 8 is a block diagram showing an imaging apparatus applicable to the embodiment of the image processing apparatus according to the present invention.

The imaging apparatus to be applied to any one of the embodiments of the image processing apparatus according to the present invention is shown in FIG. 8 as comprising an imaging device 91, an analog processing unit 92 for carrying out an image processing on an analog image signal received from the imaging device 91, an AD converting unit 93 for converting the analog image signal into a digital image signal, and an image signal processing unit 94 for carrying out an image processing on the digital image signal. The image signal processing unit 94 includes a timing control section 95 for synchronizing the image signal, a memory 96, an image signal synthesizing section 97 for synthesizing long image signals with short image signals, and an image processing section 98.

The imaging device 91 is constituted by a solid-state image sensing device such as for example a CCD (charge-coupled device), a CMOS (complementary metal oxide semiconductor), or the like, and operative to convert light into an electrical signal, viz., an image signal. The analog processing unit 92 is operative to carry out an image processing such as, for example, correlated double sampling (CDS), automatic amplitude control (AGC), and the like on the analog image signal. The AD converting unit 93 is operative to convert the analog image signal into a digital image signal to be inputted to the image signal processing unit 94.

The timing control section 95 forming part of the image signal processing unit 94 is operative to temporarily store the image signal in the memory 96 to synchronize the long image signals with the short image signals in such a manner that the long image signals and the short image signals forming part of the same image signals indicative of the object are processed concurrently, the image signal synthesizing section 97 is operative to synthesize the long image signals with the short image signals, and the image processing section 98 is operative to carry out an image signal processing on the image signal thus synthesized and output the image signals therethrough.

Further, in the imaging apparatus, the imaging device 91, the analog processing unit 92, and the AD converting unit 93 are operative at a rate several times as fast as that of images in respective exposure times so as to obtain image signals indicative of the images different from one another in exposure time, and the timing control section 95 is operative to temporarily store the image signals in the memory 96 to synchronize the image signals with one another so as to process the image signals different from one another in exposure time.

This leads to the fact that memory capacity required to selectively switch screens respectively forming part of the image signals different from one another in exposure time is calculated in accordance with an expression 9 as follows.

$$\text{Memory Capacity} = \text{Data for one whole Screen} * (\text{the number of image signals different from one another in exposure time - 1}) \qquad (\text{Expression 9})$$

Likewise, memory capacity required to selectively switch lines respectively forming part of the image signals different from one another in exposure time is calculated in accordance with an expression 10 as follows.

$$\text{Memory Capacity} = \text{Data for one Line} * (\text{the number of image signals different from one another in exposure time - 1}) \qquad (\text{Expression 10})$$

Though it has been described in the above that the imaging apparatus comprises one single imaging device 91, one single analog processing unit 92, and one single AD converting unit 93 electrically connected in series as shown in FIG 8, the imaging apparatus may comprise a plurality of imaging devices, analog processing units, and AD converting units to make a plurality of lines each having one imaging device, one analog processing units, one AD converting unit electrically connected in series with one another. The imaging apparatus thus constructed can eliminate the need of the timing control section 95 and the memory 96 to synchronize the image signals different in exposure time from one another as well as obtain a plurality of images different from one another in exposure time with no time deviation.

Further the imaging apparatus may further comprise a filter for limiting an amount of light, for example, a natural density filter, hereinlater simply referred to as "ND filter" for limiting the signal levels of the image signals without modifying their frequency characteristics. This means that the imaging apparatus may comprise an ND filter in the form of checkered or striped pattern disposed in the vicinity of the imaging device 91 to obtain image signals different from one another in signal level, which are substantially equivalent in effect to the image signals different from one another in exposure time. The imaging apparatus thus constructed can decrease time deviation and facilitate the synchronization process carried out at the timing control section 95 resulting from the fact that the ND filter is operative to alternately output high-intensity image signal and low-intensity image signal.

As will be seen from the foregoing description, it will be understood that the imaging apparatus applied to any one of the embodiments of the image processing apparatus can obtain the images of a wide dynamic range so as to prevent dark portions of the object displayed on, for example, the monitor from becoming monotonously black and ambiguous and bright portions of the object displayed on the monitor from becoming monotonously white in a simple manner, resulting from the fact that the imaging apparatus is operative to convert a plurality of images different in brightness from one another into a plurality of image signals, and synthesize the image signals.

While it has been described in the above about the image processing apparatus according to the present invention, the present invention may be implemented by an image processing program executable by a machine to perform a set of process steps necessary to obtain high quality images of a wide dynamic range in a simple manner while reducing processing delays and computing errors, and thus loss of minute image information.

Further, the aforementioned program may be embodied in a program storage medium readable by a machine to perform a set of process steps necessary to obtain high quality images of a wide dynamic range in a simple manner while reducing processing delays and computing errors, and thus loss of minute image information.

**INDUSTRIAL APPLICABILITY OF THE PRESENT INVENTION**

As will be seen from the foregoing description, it is to be understood that the image processing apparatus according to the present invention can reduce the number of computations carried out on image signals and still obtain high quality images of a wide dynamic range so as to prevent dark portions of the object displayed on, for example, the monitor from becoming monotonously black and ambiguous and bright portions of the object displayed on the monitor from becoming monotonously white in a simple manner without increasing the size of circuits forming part thereof as well as reduce accumulated processing delays and computing errors, and thus decrease loss of minute image information, resulting from the fact that the image processing apparatus is operative to input image signals different from one another in exposure time and multiply the level converting factors by the weighting factors before the image signals are multiplied by the level converting factors.

**Claims**

1. An image processing apparatus, comprising:

   an image signal inputting means (11) for inputting long exposure time image signals and short exposure time image signals different from one another in exposure time;
   a weighting factor calculating means (14) for calculating weight factors for said long exposure time image signal and said short exposure time image signal;
   **characterized in that** said image processing apparatus further comprises:

      a first level converting factor calculating means (12) for calculating a first level converting factor to compress nonlinearly the high signal level of each long exposure time image signal so that the long exposure time image signals respectively multiplied by the level converting factors are reduced in signal level if the levels of the long time exposure image signals are above a predetermined value;
      a second level converting factor calculating means (13) for calculating a second level converting factor to compress nonlinearly the high signal level of each short exposure time image signal so that the short exposure time image signals respectively multiplied by the level converting factors are reduced in signal level if the levels of the short exposure time image signals are above a predetermined value, as well as to make the signal levels of said short exposure time image signals become closer to those of said long exposure time image signal;
      a first multiplying means (15a) for multiplying said first level converting factor with a weighting factor for said long exposure time image signal;
      a second multiplying means (15b) for multiplying said second level converting factor with a weighting factor for said short exposure time image signal;
      a third multiplying means (16a) for multiplying said long exposure time image signal with the product outputted from said first multiplying means;
      a fourth multiplying means (16b) for multiplying said short exposure time image signal with the product outputted from said second multiplying means; and
      an adding means (72) for adding up the product outputted from said third multiplying means and the product outputted from said forth multiplying means.

2. An image processing apparatus as set forth in claim 1, which further comprises:

   a first high frequency component extracting means for extracting high frequency components of said long exposure time image signal,
   a second high frequency component extracting unit for extracting high frequency components of said short exposure time image signal,
   a first high frequency level converting factor calculating means for calculating a first high frequency level converting factor to compress said high frequency components of said long exposure time image signal, which is smaller than said first level converting factor in high level portion on the basis of a signal level of the high frequency component extracted at said first high frequency component extracting means,
   a second high frequency level converting factor calculating means for calculating a second high frequency level converting factor to compress said high frequency components of said short exposure time image signal, which is smaller than said second level converting factor in high level portion on the basis of a signal level of the high frequency component extracted at said second high frequency component extracting means,
   a fifth multiplying means for multiplying high frequency component extracted at said first high frequency component extracting means by said first high frequency level converting factor,
   a sixth multiplying means for multiplying high frequency component extracted at said second high frequency component extracting means by said second high frequency level converting factor,
a second adding means for adding the resultant from said third multiplying means with the resultant from said fifth multiplying means, and outputting the resultant to said first multiplying means , and
a third adding means for adding the resultant from said forth multiplying means with the resultant from said sixth multiplying means, and outputting the resultant to said second multiplying means.

3. An image processing apparatus as set forth in any one of claims 1 and 2, in which each of said long exposure time image signal and said short exposure time image signal includes color components, and which further comprises: representative value calculating means for calculating a representative value for said color components for each of said long exposure time image signal and said short exposure time image signal, and in which said level converting factor calculating means is operative to calculate a level converting factor for each of said long exposure time image signal and said short exposure time image signal on the basis of said representative value, and said weighting factor calculating means is operative to calculate a weighting factor for each of said long exposure time image signal and said short exposure time image signal on the basis of said representative value.

4. An image processing apparatus as set forth in any one of claims 1, 2 and 3, in which said image signal inputting means is operative to input said long exposure time image signal and said short exposure time image signal from an imaging device operative to temporarily store therein said long exposure time image signal and said short exposure time image signal in such a manner that said said long exposure time image signal and said short exposure time image signal are synchronized with one another.

5. A program executable by an image processing apparatus to carry out:

an image signal inputting step of inputting long exposure time image signals and short exposure time image signals different from one another in exposure time; and
a weighting factor calculating step of calculating weight factors for said long exposure time image signal and said short exposure time image signal,
**characterized in that** said program further carries out:

a first level converting factor calculating step of calculating a first level converting factor to compress nonlinearly the high signal level of each long exposure time image signal so that the long exposure time image signals respectively multiplied by the level converting factors are reduced in signal level if the long exposure time image signals are above a predetermined value;
a second level converting factor calculating step of calculating a second level converting factor to compress nonlinearly the high signal level of each short exposure time image signal so that the short exposure time image signals respectively multiplied by the level converting factors are reduced in signal level if the short exposure time image signals are above a predetermined value, as well as to make the signal levels of said short exposure time image signals become closer to those of said long exposure time image signals;
a first multiplying step of multiplying said first level converting factor with a weighting factor for said long exposure time image signal;
a second multiplying step of multiplying said second level converting factor with a weighting factor for said short exposure time image signal;
a third multiplying step of multiplying said long exposure time image signal with the product outputted from said first multiplying means;
a fourth multiplying step of multiplying said short exposure time image signal with the product outputted from said second multiplying means; and
an adding step of adding up the product outputted from said third multiplying step and the product outputted from said forth multiplying step.

6. A program executable by an image processing apparatus as set forth in claim 5, in which said first level converting factor calculating step is of calculating said first level converting factor for said long exposure time image signal on the basis of predetermined data representative of level converting factor characteristics, and said second level converting factor calculating step is of calculating said second level converting factor for said short exposure time image signal on the basis of predetermined data representative of level converting factor characteristics.

7. A storage medium having stored therein a program executable by an image processing apparatus to carry out:

an image signal inputting step of inputting long exposure time image signals and short exposure time image signals different from one another in exposure time; and

a weighting factor calculating step of calculating weight factors for said long exposure time image signal and said short exposure time image signal,

**characterized in that** said program further carries out:

a first level converting factor calculating step of calculating a first level converting factor to compress nonlinearly the high signal level of each long exposure time image signal so that the long exposure time image signals respectively muliplied by the level converting factors are reduced in signal level if the levels of the long exposure time image signals are above a predetermined value;

a second level converting factor calculating step of calculating a second level converting factor to compress nonlinearly the high signal level of each short exposure time image signal so that the short exposure time image signals respectively multiplied by the level converting factors are reduced in signal level if the levels of the short exposure time image signals are above a predetermined value, as well as to make the signal levels of said short exposure time image signals become closer to those of said long exposure time image signals;

a first multiplying step of multiplying said first level converting factor with a weighting factor for said long exposure time image signal;

a second multiplying step of multiplying said second level converting factor with a weighting factor for said short exposure time image signal;

a third multiplying step of multiplying said long exposure time image signal with the product outputted from said first multiplying means;

a fourth multiplying step of multiplying said short exposure time image signal with the product outputted from said second multiplying means; and

an adding step of adding up the product outputted from said third multiplying step and the product outputted from said forth multiplying step.

8.  A storage medium as set forth in claim 7, in which
    said first level converting factor calculating step is of calculating said first level converting factor for said long exposure time image signal on the basis of predetermined data representative of level converting factor characteristics, and said second level converting factor calculating step is of calculating said second level converting factor for said short exposure time image signal on the basis of predetermined data representative of level converting factor characteristics.

**Patentansprüche**

1.  Bildverarbeitungsvorrichtung, umfassend:

    ein Bildsignaleingabemittel (11) zum Eingeben von Langbelichtungszeitbildsignalen und Kurzbelichtungszeitbildsignalen, die sich voneinander in der Belichtungszeit unterscheiden;
    ein Gewichtungsfaktorberechnungsmittel (14) zum Berechnen von Gewichtungsfaktoren für das Langbelichtungszeitbildsignal und das Kurzbelichtungszeitbildsignal;
    **dadurch gekennzeichnet, dass** die Bildverarbeitungsvorrichtung ferner Folgendes umfasst:

    ein erstes Pegelumwandlungsfaktorberechnungsmittel (12) zum Berechnen eines Umwandlungsfaktors zum nichtlinearen Komprimieren des hohen Signalpegels von jedem Langbelichtungszeitbildsignal, sodass die Langbelichtungszeitbildsignale, die mit den Pegelumwandlungsfaktoren multipliziert sind, im Signalpegel reduziert sind, falls die Pegel der Langbelichtungszeitbildsignale über einem vorgegebenen Wert liegen;
    ein zweites Pegelumwandlungsfaktorberechnungsmittel (13) zum Berechnen eines Umwandlungsfaktors zum nichtlinearen Komprimieren des hohen Signalpegels von jedem Kurzbelichtungszeitbildsignal, sodass die Kurzbelichtungszeitbildsignale, die mit den Pegelumwandlungsfaktoren multipliziert sind, im Signalpegel reduziert sind, falls die Pegel der Kurzbelichtungszeitbildsignale über einem vorgegebenen Wert liegen, sowie zum Veranlassen, dass sich die Signalpegel der Kurzbelichtungszeitbildsignale jenen der Langbelichtungszeitbildsignale annähern;
    ein erstes Multipliziermittel (15a) zum Multiplizieren des ersten Pegelumwandlungsfaktors mit einem Gewichtungsfaktor für das Langbelichtungszeitbildsignal;
    ein zweites Multipliziermittel (15b) zum Multiplizieren des zweiten Pegelumwandlungsfaktors mit einem Gewichtungsfaktor für das Kurzbelichtungszeitbildsignal;
ein drittes Multipliziermittel (16a) zum Multiplizieren des Langbelichtungszeitbildsignals mit dem Produkt, das aus dem ersten Multipliziermittel ausgegeben ist;
ein viertes Multipliziermittel (16b) zum Multiplizieren des Kurzbelichtungszeitbildsignals mit dem Produkt, das aus dem zweiten Multipliziermittel ausgegeben ist; und
ein Addiermittel (72) zum Summieren des Produkts, das aus dem dritten Multipliziermittel ausgegeben ist, und des Produkts, das aus dem vierten Multipliziermittel ausgegeben ist.

2. Bildverarbeitungsvorrichtung nach Anspruch 1, ferner umfassend:

ein erstes Hochfrequenzkomponentenextrahiermittel zum Extrahieren von Hochfrequenzkomponenten des Langbelichtungszeitbildsignals,
eine zweite Hochfrequenzkomponentenextrahiereinheit zum Extrahieren von Hochfrequenzkomponenten des Kurzbelichtungszeitbildsignals,
ein erstes Hochfrequenzpegelumwandlungsfaktor-Berechnungsmittel zum Berechnen eines ersten Hochfrequenzpegelumwandlungsfaktors zum Komprimieren der Hochfrequenzkomponenten des Langbelichtungszeitbildsignals, der kleiner als der erste Pegelumwandlungsfaktor im hohen Pegelanteil auf der Grundlage eines Signalpegels der Hochfrequenzkomponente ist, die an dem ersten Hochfrequenzkomponentenextrahiermittel extrahiert ist,
ein zweites Hochfrequenzpegelumwandlungsfaktor-Berechnungsmittel zum Berechnen eines ersten Hochfrequenzpegelumwandlungsfaktors zum Komprimieren der Hochfrequenzkomponenten des Kurzbelichtungszeitbildsignals, der kleiner als der zweite Pegelumwandlungsfaktor im hohen Pegelanteil auf der Grundlage eines Signalpegels der Hochfrequenzkomponente ist, die an dem zweiten Hochfrequenzkomponentenextrahiermittel extrahiert ist,
ein fünftes Multipliziermittel zum Multiplizieren der Hochfrequenzkomponente, die an dem ersten Hochfrequenzkomponentenextrahiermittel extrahiert ist, mit dem ersten Hochfrequenzpegelumwandlungsfaktor,
ein sechstes Multipliziermittel zum Multiplizieren der Hochfrequenzkomponente, die an dem zweiten Hochfrequenzkomponentenextrahiermittel extrahiert ist, mit dem zweiten Hochfrequenzpegelumwandlungsfaktor,
ein zweites Addiermittel zum Summieren der Resultante aus dem dritten Multipliziermittel und der Resultante aus dem fünften Multipliziermittel und Ausgeben der Resultante an das erste Multipliziermittel, und
ein drittes Addiermittel zum Summieren der Resultante aus dem vierten Multipliziermittel und der Resultante aus dem sechsten Multipliziermittel und Ausgeben der Resultante an das zweite Multipliziermittel.

3. Bildverarbeitungsvorrichtung nach einem der Ansprüche 1 oder 2, bei dem jedes des Langbelichtungszeitbildsignals und des Kurzbelichtungszeitbildsignals Farbkomponenten enthalten, und die ferner Folgendes umfasst:

Repräsentativwertberechnungsmittel zum Berechnen eines repräsentativen Werts für die Farbkomponenten für jedes des Langbelichtungszeitbildsignals und des Kurzbelichtungszeitbildsignals, und wobei
das Pegelumwandlungsfaktorberechnungsmittel zum Berechnen eines Pegelumwandlungsfaktors für jedes des Langbelichtungszeitbildsignals und des Kurzbelichtungszeitbildsignals auf der Grundlage des repräsentativen Werts betriebsfähig ist, und
das Gewichtungsfaktorberechnungsmittel zum Berechnen eines Gewichtungsfaktors für jedes des Langbelichtungszeitbildsignals und des Kurzbelichtungszeitbildsignals auf der Grundlage des repräsentativen Werts betriebsfähig ist.

4. Bildverarbeitungsvorrichtung nach einem der Ansprüche 1, 2 oder 3, wobei
das Bildsignaleingabemittel derart zum Eingeben des Langbelichtungszeitbildsignals und des Kurzbelichtungszeitbildsignals aus einem Bildgebungsgerät, das zum vorübergehenden Speichern des Langbelichtungszeitbildsignals und des Kurzbelichtungszeitbildsignals darin betriebsfähig ist, betriebsfähig ist, dass das Langbelichtungszeitbildsignal und das Kurzbelichtungszeitbildsignal miteinander synchronisiert sind.

5. Programm, das durch eine Bildverarbeitungsvorrichtung zum Durchführen von Folgendem ausführbar ist:

einen Bildsignaleingabeschritt des Eingebens von Langbelichtungszeitbildsignalen und Kurzbelichtungszeitbildsignalen, die sich voneinander in der Belichtungszeit unterscheiden; und
einen Gewichtungsfaktorberechnungsschritt des Berechnens von Gewichtungsfaktoren für das Langbelichtungszeitbildsignal und das Kurzbelichtungszeitbildsignal,
**dadurch gekennzeichnet, dass** das Programm ferner Folgendes durchführt:

einen ersten Pegelumwandlungsfaktorberechnungsschritt des Berechnens eines Umwandlungsfaktors zum nichtlinearen Komprimieren des hohen Signalpegels von jedem Langbelichtungszeitbildsignal, sodass die Langbelichtungszeitbildsignale, die mit den Pegelumwandlungsfaktoren multipliziert sind, im Signalpegel reduziert sind, falls die Pegel der Langbelichtungszeitbildsignale über einem vorgegebenen Wert liegen; einen zweiten Pegelumwandlungsfaktorberechnungsschritt des Berechnens eines Umwandlungsfaktors zum nichtlinearen Komprimieren des hohen Signalpegels von jedem Kurzbelichtungszeitbildsignal, sodass die Kurzbelichtungszeitbildsignale, die mit den Pegelumwandlungsfaktoren multipliziert sind, im Signalpegel reduziert sind, falls die Pegel der Kurzbelichtungszeitbildsignale über einem vorgegebenen Wert liegen, sowie des Veranlassens, dass sich die Signalpegel der Kurzbelichtungszeitbildsignale jenen der Langbelichtungszeitbildsignale annähern;

einen ersten Multiplizierschritt des Multiplizierens des ersten Pegelumwandlungsfaktors mit einem Gewichtungsfaktor für das Langbelichtungszeitbildsignal;

einen zweiten Multiplizierschritt des Multiplizierens des zweiten Pegelumwandlungsfaktors mit einem Gewichtungsfaktor für das Kurzbelichtungszeitbildsignal;

einen dritten Multiplizierschritt des Multiplizierens des Langbelichtungszeitbildsignals mit dem Produkt, das aus dem ersten Multipliziermittel ausgegeben ist;

einen vierten Multiplizierschritt des Multiplizierens des Kurzbelichtungszeitbildsignals mit dem Produkt, das aus dem zweiten Multipliziermittel ausgegeben ist; und

einen Addierschritt des Summierens des Produkts, das aus dem dritten Multiplizierschritt hervorgeht, und des Produkts, das aus dem vierten Multiplizierschritt hervorgeht.

6. Programm, das durch eine Bildverarbeitungsvorrichtung ausführbar ist, nach Anspruch 5, wobei

der erste Pegelumwandlungsfaktorberechnungsschritt das Berechnen des ersten Pegelumwandlungsfaktors für das Langbelichtungszeitbildsignal auf der Grundlage vorgegebener Daten, die Pegelumwandlungsfaktormerkmale darstellen, ist und

der zweite Pegelumwandlungsfaktorberechnungsschritt das Berechnen des zweiten Pegelumwandlungsfaktors für das Kurzbelichtungszeitbildsignal auf der Grundlage vorgegebener Daten, die Pegelumwandlungsfaktormerkmale darstellen, ist.

7. Speichermedium, das darin ein Programm gespeichert aufweist, welches durch eine Bildverarbeitungsvorrichtung zum Durchführen von Folgendem ausführbar ist:

einen Bildsignaleingabeschritt des Eingebens von Langbelichtungszeitbildsignalen und Kurzbelichtungszeitbildsignalen, die sich voneinander in der Belichtungszeit unterscheiden; und

einen Gewichtungsfaktorberechnungsschritt des Berechnens von Gewichtungsfaktoren für das Langbelichtungszeitbildsignal und das Kurzbelichtungszeitbildsignal,

**dadurch gekennzeichnet, dass** das Programm ferner Folgendes durchführt:

einen ersten Pegelumwandlungsfaktorberechnungsschritt des Berechnens eines Umwandlungsfaktors zum nichtlinearen Komprimieren des hohen Signalpegels von jedem Langbelichtungszeitbildsignal, sodass die Langbelichtungszeitbildsignale, die mit den Pegelumwandlungsfaktoren multipliziert sind, im Signalpegel reduziert sind, falls die Pegel der Langbelichtungszeitbildsignale über einem vorgegebenen Wert liegen; einen zweiten Pegelumwandlungsfaktorberechnungsschritt des Berechnens eines Umwandlungsfaktors zum nichtlinearen Komprimieren des hohen Signalpegels von jedem Kurzbelichtungszeitbildsignal, sodass die Kurzbelichtungszeitbildsignale, die mit den Pegelumwandlungsfaktoren multipliziert sind, im Signalpegel reduziert sind, falls die Pegel der Kurzbelichtungszeitbildsignale über einem vorgegebenen Wert liegen, sowie des Veranlassens, dass sich die Signalpegel der Kurzbelichtungszeitbildsignale jenen der Langbelichtungszeitbildsignale annähern;

einen ersten Multiplizierschritt des Multiplizierens des ersten Pegelumwandlungsfaktors mit einem Gewichtungsfaktor für das Langbelichtungszeitbildsignal;

einen zweiten Multiplizierschritt des Multiplizierens des zweiten Pegelumwandlungsfaktors mit einem Gewichtungsfaktor für das Kurzbelichtungszeitbildsignal;

einen dritten Multiplizierschritt des Multiplizierens des Langbelichtungszeitbildsignals mit dem Produkt, das aus dem ersten Multipliziermittel ausgegeben ist;

einen vierten Multiplizierschritt des Multiplizierens des Kurzbelichtungszeitbildsignals mit dem Produkt, das aus dem zweiten Multipliziermittel ausgegeben ist; und

einen Addierschritt des Summierens des Produkts, das aus dem dritten Multiplizierschritt hervorgeht, und des Produkts, das aus dem vierten Multiplizierschritt hervorgeht.

8. Speichermedium nach Anspruch 7, wobei

   der erste Pegelumwandlungsfaktorberechnungsschritt das Berechnen des ersten Pegelumwandlungsfaktors für das Langbelichtungszeitbildsignal auf der Grundlage vorgegebener Daten, die Pegelumwandlungsfaktormerkmale darstellen, ist und

   der zweite Pegelumwandlungsfaktorberechnungsschritt das Berechnen des zweiten Pegelumwandlungsfaktors für das Kurzbelichtungszeitbildsignal auf der Grundlage vorgegebener Daten, die Pegelumwandlungsfaktormerkmale darstellen, ist.

**Revendications**

1. Appareil de traitement d'image, comprenant :

   un moyen d'entrée (11) de signal d'image pour entrer des signaux d'image à longue durée d'exposition et des signaux d'image à courte durée d'exposition présentant des durées d'exposition différentes ;
   un moyen de calcul (14) de facteur de pondération pour calculer des facteurs de pondération pour ledit signal d'image à longue durée d'exposition et ledit signal d'image à courte durée d'exposition ;
   **caractérisé en ce que** ledit dispositif de traitement d'image comprend en outre :

   un moyen de calcul (12) d'un premier facteur de conversion de niveau pour calculer un premier facteur de conversion de niveau afin de compresser de manière non linéaire le niveau de signal élevé de chaque signal d'image à longue durée d'exposition de sorte que les signaux d'image à longue durée d'exposition multipliés respectivement par les facteurs de conversion de niveau voient leur niveau de signal diminuer si les niveaux des signaux d'image à longue durée d'exposition sont supérieurs à une valeur prédéterminée,
   un moyen de calcul (13) d'un deuxième facteur de conversion de niveau pour calculer un deuxième facteur de conversion de niveau afin de compresser de manière non linéaire le niveau de signal élevé de chaque signal d'image à courte durée d'exposition de sorte que les signaux d'image à courte durée d'exposition multipliés respectivement par les facteurs de conversion de niveau voient leur niveau de signal diminuer si les niveaux des signaux d'image à courte durée d'exposition sont supérieurs à une valeur prédéterminée, ainsi que pour rapprocher les niveaux de signal desdits signaux d'image à courte durée d'exposition de ceux desdits signaux d'image à longue durée d'exposition ;
   un premier moyen de multiplication (15a) pour multiplier ledit premier facteur de conversion de niveau par un facteur de pondération pour ledit signal d'image à longue durée d'exposition ;
   un deuxième moyen de multiplication (15b) pour multiplier ledit deuxième facteur de conversion de niveau par un facteur de pondération pour ledit signal d'image à courte durée d'exposition ;
   un troisième moyen de multiplication (16a) pour multiplier ledit signal d'image à longue durée d'exposition par le produit sortant dudit premier moyen de multiplication ;
   un quatrième moyen de multiplication (16b) pour multiplier ledit signal d'image à courte durée d'exposition par le produit sortant dudit deuxième moyen de multiplication ; et
   un moyen d'addition (72) pour ajouter le produit sortant dudit troisième moyen de multiplication et le produit sortant dudit quatrième moyen de multiplication.

2. Appareil de traitement d'images tel que revendiqué dans la revendication 1, qui comprend en outre :

   un premier moyen d'extraction de composante de haute fréquence pour extraire des composantes de haute fréquence dudit signal d'image à longue durée d'exposition,
   une deuxième unité d'extraction de composante de haute fréquence pour extraire des composantes de haute fréquence dudit signal d'image à courte durée d'exposition,
   un moyen de calcul d'un premier facteur de conversion de niveau de haute fréquence pour calculer un premier facteur de conversion de niveau de haute fréquence afin de compresser lesdites composantes de haute fréquence dudit signal d'image à longue durée d'exposition, qui est plus petit que ledit premier facteur de conversion de niveau en une partie de haut niveau sur la base d'un niveau de signal de la composante de haute fréquence extraite audit premier moyen d'extraction de composante de haute fréquence,
   un moyen de calcul d'un deuxième facteur de conversion de niveau de haute fréquence pour calculer un deuxième facteur de conversion de niveau de haute de fréquence afin de compresser lesdites composantes de haute fréquence dudit signal d'image à courte durée d'exposition, qui est plus petit que ledit facteur de conversion de deuxième niveau en une partie de haut niveau sur la base d'un niveau de signal de la composante de haute fréquence extraite audit deuxième moyen d'extraction de composante de haute fréquence,

un cinquième moyen de multiplication pour multiplier une composante de haute fréquence extraite audit premier moyen d'extraction de composante de haute fréquence par ledit premier facteur de conversion de niveau de haute fréquence,

un sixième moyen de multiplication pour multiplier une composante de haute fréquence extraite audit deuxième moyen d'extraction de composante de haute fréquence par ledit deuxième facteur de conversion de niveau de haute fréquence,

un deuxième moyen d'addition pour ajouter la résultante dudit troisième moyen de multiplication à la résultante dudit cinquième moyen de multiplication, et délivrer en sortie la résultante audit premier moyen de multiplication, et

un troisième moyen d'addition pour ajouter la résultante dudit quatrième moyen de multiplication à la résultante dudit sixième moyen de multiplication, et délivrer en sortie la résultante audit deuxième moyen de multiplication.

3. Appareil de traitement d'image tel que revendiqué dans l'une quelconque des revendications 1 et 2, dans lequel chacun desdits signal d'image à longue durée d'exposition et signal d'image à courte durée d'exposition comporte des composantes de couleur, et qui comprend en outre : un moyen de calcul de valeur représentative pour calculer une valeur représentative pour lesdites composantes de couleur pour chacun desdits signal d'image à longue durée d'exposition et signal d'image à courte durée d'exposition, et dans lequel

ledit moyen de calcul de facteur de conversion de niveau peut être mis en oeuvre pour calculer un facteur de conversion de niveau pour chacun desdits signal d'image à longue durée d'exposition et signal d'image à courte durée d'exposition sur la base de ladite valeur représentative, et

ledit moyen de calcul de facteur de pondération peut être mis en oeuvre pour calculer un facteur de pondération pour chacun desdits signal d'image à longue durée d'exposition et ledit signal d'image à courte durée d'exposition sur la base de ladite valeur représentative.

4. Appareil de traitement d'image tel que revendiqué dans l'une quelconque des revendications 1, 2 et 3, dans lequel ledit moyen d'entrée de signal d'image peut être mis en oeuvre pour entrer ledit signal d'image à longue durée d'exposition et ledit signal d'image à courte durée d'exposition à partir d'un dispositif d'imagerie pouvant être mis en oeuvre pour temporairement stocker dedans ledit signal d'image à longue durée d'exposition et ledit signal d'image à courte durée d'exposition pour que ledit signal d'image à longue durée d'exposition et ledit signal d'image à courte durée d'exposition soient synchronisés l'un par rapport à l'autre.

5. Programme exécutable par un appareil de traitement d'image pour effectuer :

une étape d'entrée de signal d'image qui consiste à entrer des signaux d'image à longue durée d'exposition et des signaux d'image à courte durée d'exposition présentant des durées d'exposition différentes ; et

une étape de calcul de facteur de pondération qui consiste à calculer des facteurs de pondération pour ledit signal d'image à longue durée d'exposition et ledit signal d'image à courte durée d'exposition,

**caractérisé en ce que** ledit programme effectue en outre :

une étape de calcul d'un premier facteur de conversion de niveau qui consiste à calculer un premier facteur de conversion de niveau pour compresser de manière non linéaire le niveau de signal élevé de chacun dudit signal d'image à longue durée d'exposition de sorte que les signaux d'image d'exposition à longue durée respectivement multipliés par les facteurs de conversion de niveau voient leur niveau de signal diminuer si les signaux d'image à longue durée d'exposition sont supérieurs à une valeur prédéterminée ;

une étape de calcul d'un deuxième facteur de conversion de niveau qui consiste à calculer un deuxième facteur de conversion de niveau afin de compresser de manière non linéaire le niveau de signal élevé de chaque signal d'image à courte durée exposition de sorte que les signaux d'image à courte durée d'exposition respectivement multipliés par les facteurs de conversion de niveau voient leur niveau de signal diminuer si les signaux d'image à courte durée d'exposition sont supérieurs à une valeur prédéterminée, ainsi que de pour rapprocher les niveaux de signal desdits signaux d'image à courte durée d'exposition de ceux desdits signaux d'image à longue durée d'exposition ;

une première étape de multiplication qui consiste à multiplier ledit premier facteur de conversion de niveau par un facteur de pondération pour ledit signal d'image à longue durée d'exposition ;

une deuxième étape de multiplication qui consiste à multiplier ledit deuxième facteur de conversion de niveau par un facteur de pondération pour ledit signal d'image à courte durée d'exposition ;

une troisième étape de multiplication qui consiste à multiplier ledit signal d'image à longue durée d'exposition par le produit sortant dudit premier moyen de multiplication ;

une quatrième étape de multiplication qui consiste à multiplier ledit signal d'image à courte durée d'exposition

EP 1 592 235 B1

par le produit sortant dudit deuxième moyen de multiplication ; et
une étape d'addition qui consiste à ajouter le produit sortant de ladite troisième étape et le produit sortant de ladite quatrième étape de multiplication.

6. Programme exécutable par un appareil de traitement d'image tel que revendiqué dans la revendication 5, dans lequel ladite étape de calcul d'un premier facteur de conversion de niveau consiste à calculer ledit premier facteur de conversion de niveau pour ledit signal d'image à longue durée d'exposition sur la base des données prédéterminées qui représentent des caractéristiques de facteur de conversion de niveau, et
ladite étape de calcul d'un deuxième facteur de conversion de niveau consiste à calculer ledit deuxième facteur de conversion de niveau pour ledit signal d'image à courte durée d'exposition sur la base des données prédéterminées qui représentent des caractéristiques de facteur de conversion de niveau.

7. Support de stockage dans lequel est stocké un programme exécutable par un appareil de traitement d'image destiné à effectuer :

   une étape d'entrée de signal d'image qui consiste à entrer des signaux d'image à longue durée d'exposition et des signaux d'image à courte durée d'exposition présentant des durées d'exposition différentes ; et
   une étape de calcul de facteur de pondération pour calculer des facteurs de pondération pour ledit signal d'image à longue durée d'exposition et ledit signal d'image à courte durée d'exposition,
   **caractérisé en ce que** ledit programme effectue en outre :

   une étape de calcul d'un premier facteur de conversion de niveau qui consiste à calculer un premier facteur de conversion de niveau afin de compresser de manière non linéaire le niveau de signal élevé de chaque signal d'image à longue durée d'exposition de sorte que les signaux d'image à longue durée d'exposition multipliés respectivement par les facteurs de conversion de niveau voient leur niveau de signal diminuer si les niveaux des signaux d'image à longue durée d'exposition sont supérieurs à une valeur prédéterminée ;
   une étape de calcul d'un deuxième facteur de conversion de niveau qui consiste à calculer un deuxième facteur de conversion de niveau afin de compresser de manière non linéaire le niveau de signal élevé de chaque signal d'image à courte durée exposition de sorte que les signaux d'image à courte durée d'exposition multipliés respectivement par les facteurs de conversion de niveau voient leur niveau de signal diminuer si les niveaux des signaux d'image à courte durée d'exposition sont supérieurs à une valeur prédéterminée, ainsi que pour rapprocher les niveaux de signal desdits signaux d'image à courte durée d'exposition de ceux desdits signaux d'image à longue durée d'exposition ;
   une première étape de multiplication qui consiste à multiplier ledit premier facteur de conversion de niveau par un facteur de pondération pour ledit signal d'image à longue durée d'exposition ;
   une deuxième étape de multiplication qui consiste à multiplier ledit deuxième facteur de conversion de niveau par un facteur de pondération pour ledit signal d'image à courte durée d'exposition ;
   une troisième étape de multiplication qui consiste à multiplier ledit signal d'image à longue durée d'exposition par le produit sortant dudit premier moyen de multiplication ;
   une quatrième étape de multiplication qui consiste à multiplier ledit signal d'image à courte durée d'exposition par le produit sortant dudit deuxième moyen de multiplication ; et
   une étape d'addition qui consiste à ajouter le produit sortant de ladite troisième étape et le produit sortant de ladite quatrième étape de multiplication.

8. Support de stockage tel que revendiqué dans la revendication 7, dans lequel
ladite étape de calcul d'un premier facteur de conversion de niveau consiste à calculer ledit premier facteur de conversion de niveau pour ledit signal d'image à longue durée d'exposition sur la base des données prédéterminées qui représentent des caractéristiques de facteur de conversion de niveau, et
ladite étape de calcul d'un deuxième facteur de conversion de niveau consiste à calculer ledit deuxième facteur de conversion de niveau pour ledit signal d'image à courte durée d'exposition sur la base des données prédéterminées qui représentent des caractéristiques de facteur de conversion de niveau.

# FIG.1

# FIG.2

Signal Level

24

23

21

22

Brightness Level of Object

# FIG.3

Level Compressing
Function31

(a)

Long Image Signal

Level Converting
Function32

(b)

Long Image Signal

Level Compressing
Function33

(c)

Short Image Signal

Level Converting
Function34

(d)

Short Image Signal

# FIG.4

Output Image Signal

41

42

Input Image Signal

# FIG.5

# FIG.6

# FIG.7

Weighting Factor Calculating Unit — 85

First Representative Value Calculating Unit — 82a

First Level Converting Factor Calculating Unit — 83

Second Representative Value Calculating Unit — 82b

Second Level Converting Factor Calculating Unit — 84

Image Signal Inputting Unit — 81

86a

86b

87a

87b

88

# FIG.8

**94**

Image Signal Processing Unit

**95**

**98**

| Imaging Device | → | Analog Processing Unit | → | AD Converting Unit | → | Timing Control Section | → | Image Signal Synthesizing Section | → | Image Processing Section | → |

**91**     **92**     **93**

**97**

Memory

**96**

# FIG.9

EP 1 592 235 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06141229 B